# EUROPEAN PATENT SPECIFICATION

(11) **EP 1 594 652 B1**
(45) Date of publication and mention of the grant of the patent: **27.09.2006**
(21) Application number: 04710949.1
(22) Date of filing: 13.02.2004
(51) Int. Cl.: B23Q 11/08

(54) **A PROTECTIVE DEVICE**
SCHUTZVORRICHTUNG
DISPOSITIF DE PROTECTION

(30) Priority: 19.02.2003 IT BO20030070
(43) Date of publication of application: 16.11.2005
(73) Proprietor: P.E.I. Protezioni Elaborazioni Industriali S.r.l., 40012 Calderara di Reno (Bologna) (IT)
(72) Inventor: BENEDETTI, Michele, I-40132 Bologna (IT)
(74) Representative: Lanzoni, Luciano
(86) International application number: PCT/IB2004/000451
(87) International publication number: WO 2004/073921

(56) References cited:
- US-A- 4 727 743
- US-A- 5 067 285
- US-A- 5 624 363

## Description

### Technical Field

The present invention relates to a device for protecting parts of manufacturing machines and, more specifically, a protective device of the type comprising flexible means such as, for example, a belt or a cloth sheet that is much longer than it is wide and is of the type that rolls up around a tensioning or compensating roller.

### Background Art

In prior art, the flexible means may consist of a belt made of plastic coated fabric. Devices of this first type, although they have the advantage of being light in weight and occupying little space when they are rolled up on the roller, offer little resistance to high temperature and abrasion and are therefore unsuitable for use on manufacturing machines such as machine tools that produce incandescent or sharp-edged swarf and chippings.

A second type of these flexible means consists of a metal belt with optimum heat and abrasion resistance properties but having the disadvantage of brittleness and, as a result, low durability.

A third type of flexible means for this application consists of a shutter-like system with modular metal slats connected to each other by joints. Flexible means of this kind are highly resistant but cumbersome, heavy and very expensive. <INSERT P.1a>

The aim of the present invention is to provide a protective device for parts of manufacturing machines that overcomes the above mentioned disadvantages.

### Disclosure of the invention

In accordance with the invention, this aim is achieved by a protective device for parts of manufacturing machines as claimed in claim 1. It is also known, from document US5067285, a seal belt assembly for a robot mechanism, for continuously covering the open top of a cabinet in which an operative device is moved along a rectilinear axis between two opposite sides of the cabinet. The seal belt subassembly comprises two sections, each composed of a belt to which are attached elongated tubular members constructed of thin wall steel between which are sandwiched the foam filler.

### Description of the drawings

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
Figure 1 is a perspective view, with some parts cut away, of a protective device according to the present invention;

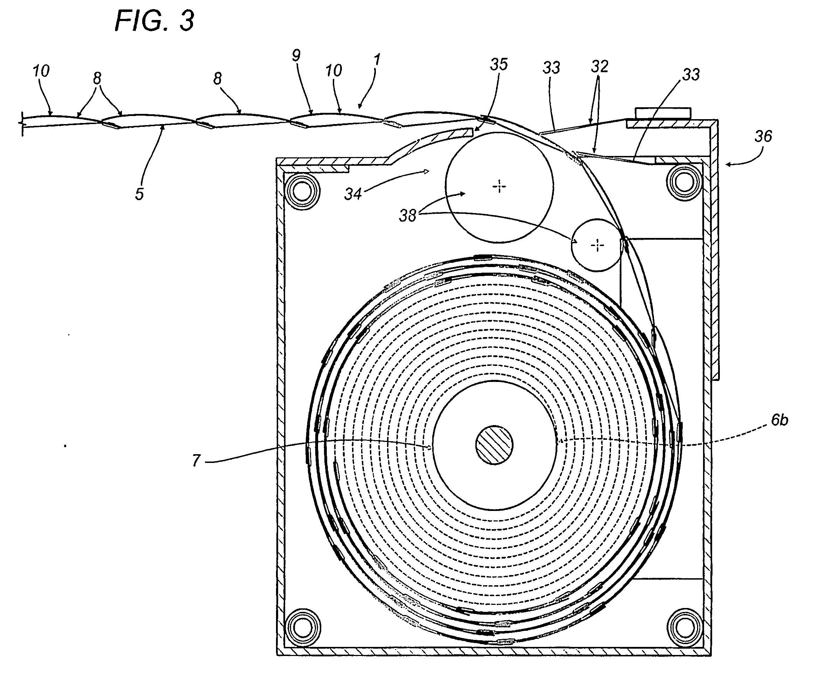

Figures 2 and 3 are schematic side views, partly in cross section, showing two details of the device according to the present invention;
Figures 4 to 8 are scaled up views showing five embodiments of a detail of the device illustrated in Figure 1;
Figures 9, 10 and 11 are exploded and cross sectional views of the detail of Figure 8; Figure 11 showing an alternative embodiment of the device of Figure 1.

### Detailed description of the preferred embodiments of the invention

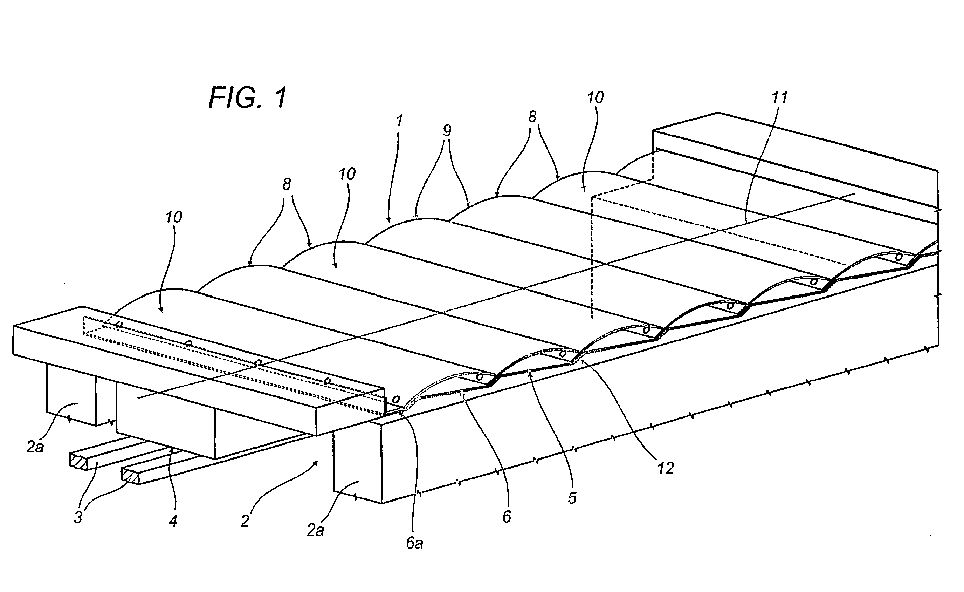

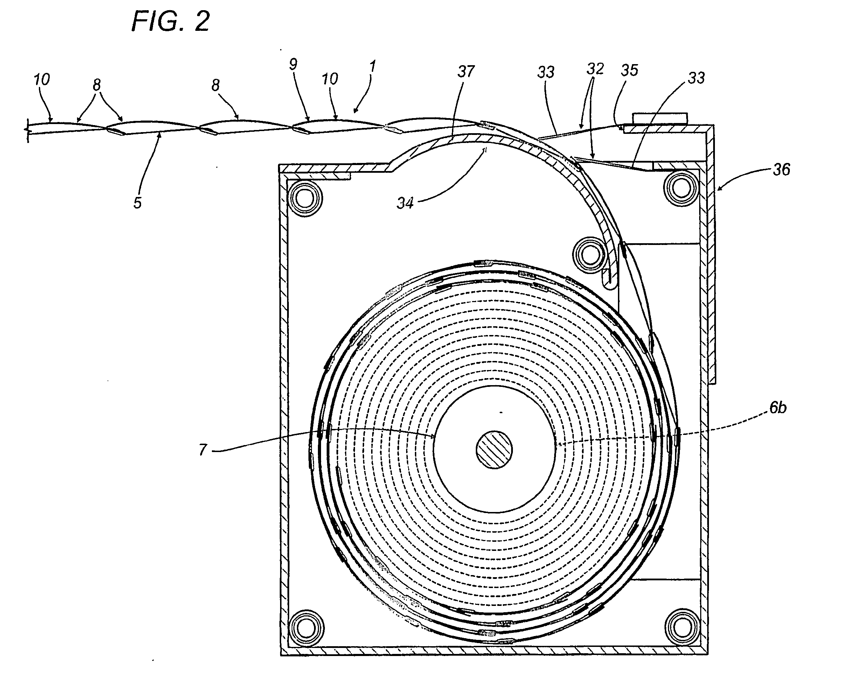

With reference to Figures 1 and 2, the numeral 1 denotes in its entirety a device for protecting parts of a manufacturing machine at a zone 2 defined, for example, by two vertical walls 2a and along which there extend, for example, two guides 3 for an element 4 that moves in both directions along these guides 2.

The protective device 1 comprises a flexible member 5 such as, for example, a belt-like element 6, having one end 6a fixed to the mobile element 4 and a second end 6b connected to a customary roller 7, illustrated in Figure 2, inside which there are elastic means for pre-loading the roller 7. In this way, the belt-like element 6 is kept constantly tensioned as it rolls and unrolls onto and from the roller 7, whatever the position of the mobile element 4 along the guides 3, which are positioned horizontally in the drawings but which in practice may be in any position.

According to the invention, the belt-like element 6 is connected to covering means, labelled 8 in their entirety and which, in the embodiment illustrated, consist of a plurality of cover elements 9 consisting of thin slats 10 lying transversely to the longitudinal axis 11 of the belt-like element 6 and are fixed to the latter, at a zone 12 defined by a longitudinal edge 13, through connecting means denoted generically and in their entirety by the numeral 14.

As a result of this connection, each slat 10, which, in the embodiment illustrated, is shaped like an arch with the concave section facing the belt-like element 6, is free to oscillate about the fixing area and is arranged in such manner that it overlaps the adjacent slat 10. Thus, the cover elements 9 are arranged over the belt-like element in an overlapping manner.

The curvature radius of the slats 10 is chosen according to the radius of the roller 7 so as to minimise the space occupied by the device 1 when it is fully rolled up on the roller 7. Further, the arched shape confers rigidity on the slats 10.

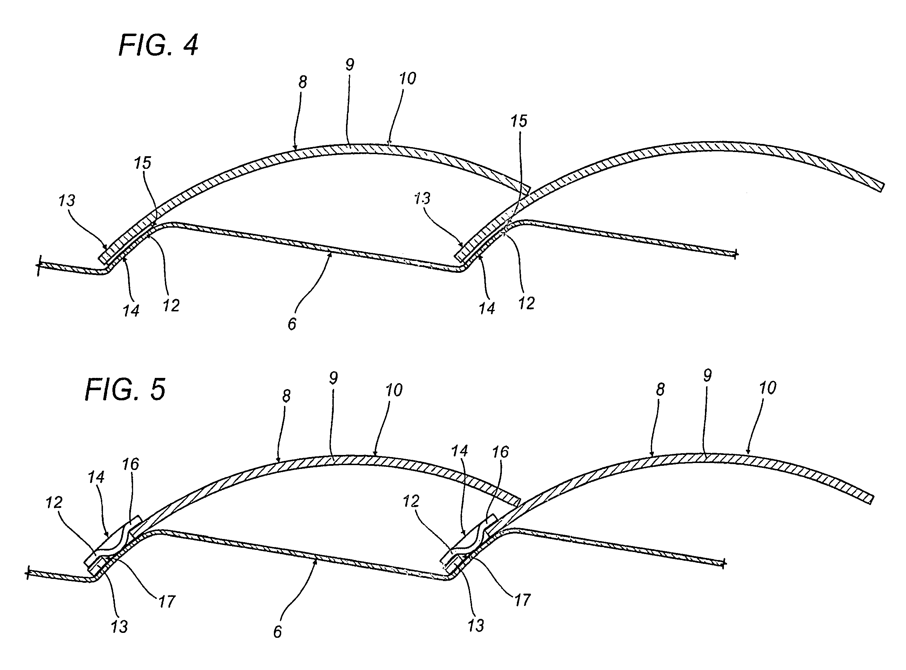

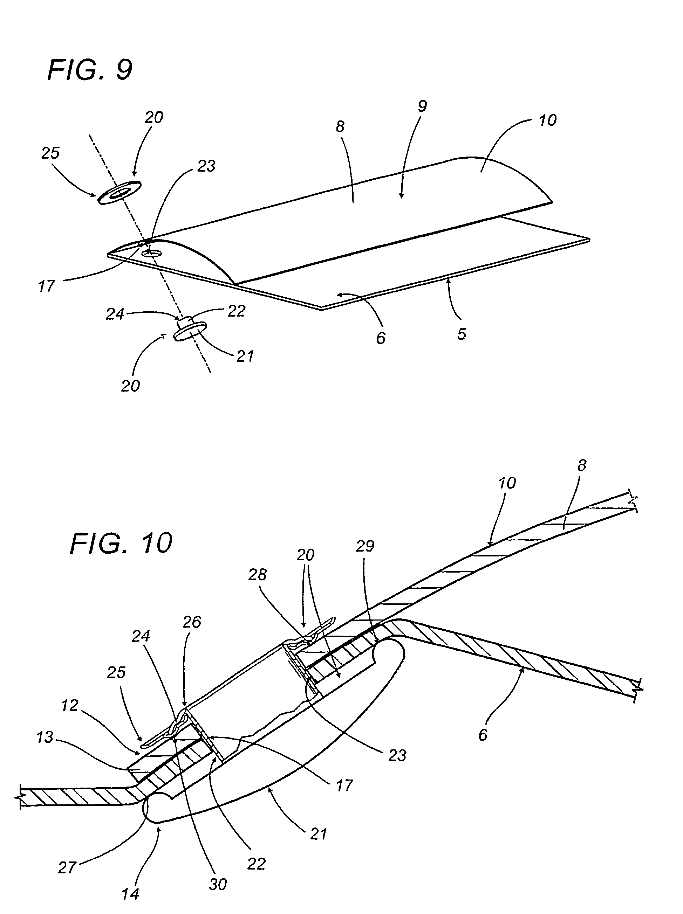

With reference to Figures 4 to 10, the connecting means 14 may be embodied in several ways. In Figure 4, they consist of a layer 15 of adhesive material 15 placed between the longitudinal edge 13 and the belt-like element 6. In Figure 5, the connecting means 14 comprise a strip of plastic 16 positioned along the longitudinal edge 13 of each slat 10 on the side of the edge 13 opposite the belt-like element 6. To obtain this type of connection along the edges 13 of the slats 10, there are holes 17 through which the strip 16 is fixed to the belt-like element 6 by a sealing operation.

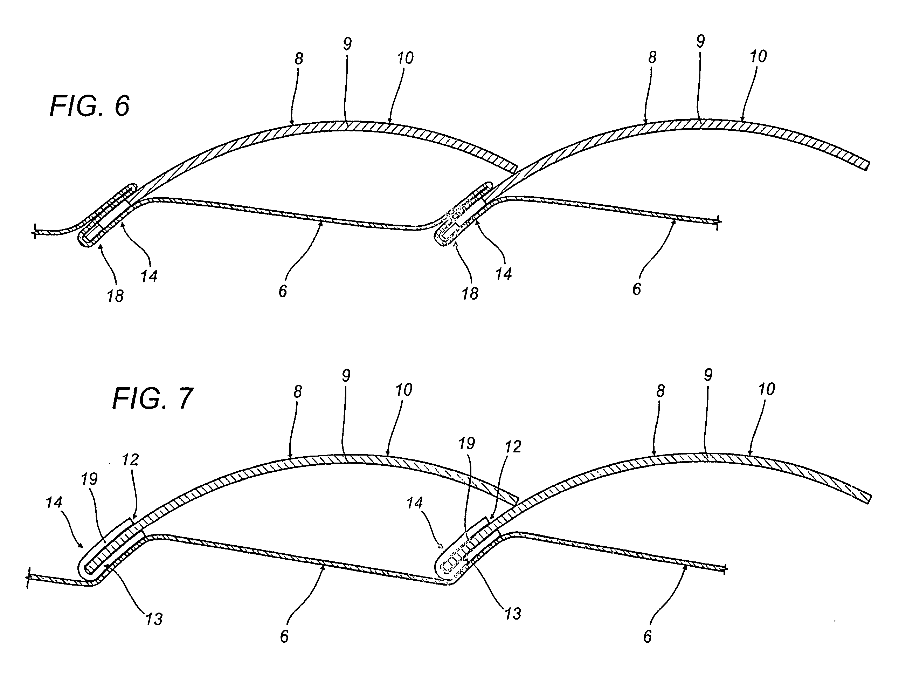

In the embodiment shown in Figure 6, the connecting means 14 consist of a U-shaped fold 18 of the belt-like element 6 around the longitudinal edge 13 of each slat 10. Fixing is then accomplished by heat sealing or by the use of an adhesive.

In Figure 7, the connecting means 14 comprise a plastic profile 19 folded in a U shape around the longitudinal edge 13 of each slat 10. The fixing means may be obtained by a process of vulcanising the profile 19 on the edge 13, whilst the side of the profile 19 in contact with the belt-like element 6 is fixed to the latter by heat sealing or by interposition of a layer of adhesive material.

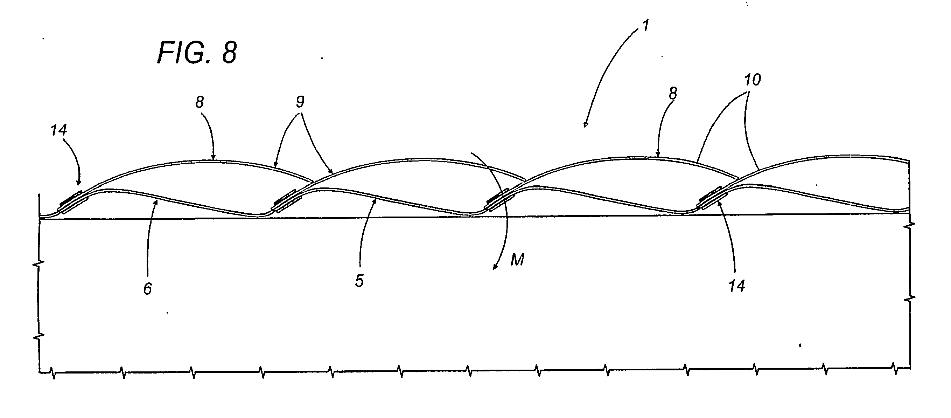

As illustrated in Figures 8, 9 and 10, the connecting means 14 comprise fastening means, labelled 20 in their entirety, and comprising a head 21 equipped with a stem 22 insertable into a matching hole 17 made in the edge 13 of the slat 10 and into a matching hole 23 made in the belt-like element 6 coaxially with the hole 17. It should be noticed that there may be any number of holes 23 and 17 along the edge 13. The free end 24 of the stem 22 protruding from the hole 17 is beaten out on the slat 10 with an interposed washer 25 with a curved surface whose concave section is opposite the respective contact zone and which, together with the beaten out end 24, forms a fastening counterhead 26. At respective zones 27 and 28 of contact with the belt-like element 6 and with the slat 10, the head 21 and the counterhead 26 are equipped with curved surfaces 29 and 30 that define the contact zones 27 and 28 which are coaxial with the holes 17 and 23 and spaced from the edges of the latter.

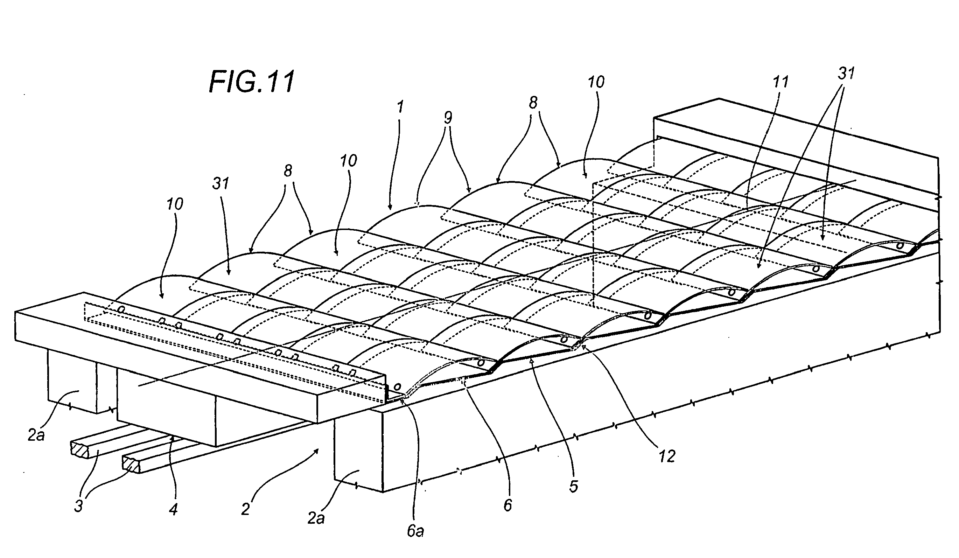

In the embodiment of the device 1 illustrated in Figure 11, the cover elements 9 consist of a plurality of tiles 31 that overlap each other not only along the longitudinal axis 11 of the belt-like element 6, in the same way as the slats 10 of Figure 1, but also transversely to the longitudinal axis 11.

Like the slats 10, the tiles 31 in the embodiment of Figure 11 are also arch shaped. It should be noted, however, that both the slats 10 and the tiles 31 may present a flat structure (not illustrated) and that the means 14 for connecting the tiles 31 to the belt-like element 6 may be the same as the means 14 described with reference to the slats 10.

In both their embodiments, the cover elements 9 may be made preferably of a rigid or elastically flexible material such as plastic or metal, especially harmonic steel.

As illustrated for example in Figure 8, as a result of the constant tension applied to them, the belt-like element 6 and the slats 10 or tiles 31 are subjected to a moment M, whose direction is clockwise in Figure 8, which tends to make the free edge of each cover element adhere closely to the back of the adjacent cover element 9, in such as to create an optimum seal between the cover elements 9 and to compensate for any irregularities between the edge and back surfaces of the cover elements 9.

Thanks to its imbricated structure, the protective cover device 1 effectively overcomes all the drawbacks linked to different types of chippings and swarf, is extremely compact when rolled up around the roller 7, much like an ordinary belt, and guarantees a perfect protective seal.

For keeping the outside surface of the cover elements 9 clean, cleaning scraper means 32 are provided, consisting, for example, of flexible plates 33 which scrape the outside surface of the elements 9. It should be noticed that these cleaning scraper means 32 act in conjunction with respective opposing contact and support means 34 of the belt-like element 6 positioned at an opening 35 made in a container 36 that houses the roller 7. The opposing contact and support means 34 may consist of an arch shaped surface 37, as illustrated in Figure 2, or of one or more rollers 38 whose axes are parallel to the axis of the roller 7.

## Claims

1. A protective device for parts of manufacturing machines, comprising a rolling flexible member (5) defined by a belt-like element (6) and covering means (8) consisting of a plurality of cover elements (9) fixed to the belt-like element (6) through respective connecting means (14) at a zone (12); **characterised in that** the cover elements (9) are arranged in overlapping manner on the belt-like element (6) to form an imbricated structure.

2. The device according to claim 1, **characterised in that** it comprises a roller (7) around which the rolling flexible member (5) rolls and unrolls and to which the covering means (8) are connected.

3. The device according to claim 1, **characterised in that** the cover elements (9) consist of a plurality of slats (10) lying transversely to the longitudinal axis (11) of the belt-like element (6) and arranged in such manner as to overlap each other along the longitudinal axis (11); the connecting means (14) being positioned between the belt-like element (6) and a respective longitudinal edge (13) of each slat (10).

4. The device according to claim 1, **characterised in that** the cover elements (9) consist of a plurality of tiles (31) arranged in overlapping manner both along the longitudinal axis (11) and transversely to the longitudinal axis (11) : the connecting means (14) being positioned between the belt-like element (6) and each tile (31).

5. The device according to claim 3 or 4, **characterised in that** the slats (10) and the tiles (31) present a flat structure.

6. The device according to claim 3 or 4, **characterised in that** the slats (10) and the tiles (31) present an arch shaped structure with the concave section facing the belt-like element (6).

7. The device according to any of the foregoing claims from 3 to 6, **characterised in that** the slats (10) and the tiles (31) are made of a rigid material.

8. The device according to any of the foregoing claims from 3 to 6, **characterised in that** the slats (10) and the tiles (31) are made of an elastically flexible material.

9. The device according to any of the foregoing claims from 3 to 8, **characterised in that** the connecting means (14) consist of a layer of adhesive material (15) placed between the longitudinal edge (13) and the belt-like element (6).

10. The device according to any of the foregoing claims from 3 to 8, **characterised in that** the connecting means (14) consist of a U-shaped fold (18) of the belt-like element (6) around the longitudinal edge (13); means being provided for fixing the belt-like element (6) to the longitudinal edge (13).

11. The device according to any of the foregoing claims from 3 to 8, **characterised in that** the connecting means (14) consist of a plastic profile (19) folded in a U shape around the longitudinal edge (13); means being provided for fixing one side of the profile (19) to the belt-like element (6).

12. The device according to any of the foregoing claims from 3 to 8, **characterised in that** the connecting means (14) consist of a strip of plastic (16) positioned along the longitudinal edge (13) on the side of the edge (13) opposite the belt-like element (6); means being provided for fixing the plastic strip (16) to the belt-like element (6).

13. The device according to any of the foregoing claims from 10 to 12 , **characterised in that** the longitudinal edge (13) of the slats (10) or of the tiles (31) comprises at least one hole (17).

14. The device according to any of the foregoing claims from 3 to 8 and according to claim 13, **characterised in that** the connecting means (14) comprise fastening means (20) insertable through the hole (17) made in the edge (13) of the slats (10) or tiles (31) and a matching hole (23) made in the belt-like element (6).

15. The device according to claim 14, **characterised in that** the fastening means (20) comprise a head (21), a stem (22) and a fastening counterhead (26); the head (21) and the counterhead (26) presenting curved surfaces (29, 30) that define respective zones (27, 28) of contact with the longitudinal edge (13) and with the belt-like element (6); the contact zones (27, 28) being substantially coaxial with the holes (17, 23) and spaced from the edges of the latter.

16. The device according to claim 15, **characterised in that** the fastening counterhead (26) comprises a washer (25) with a curved surface (30) whose concave section is opposite the respective contact zone (28).

17. The device according to any of the foregoing claims from 1 to 16 , **characterised in that** it comprises cleaning scraper means (32) acting in conjunction with the covering means (8).

18. The device according to claim 17, **characterised in that** the cleaning scraper means (32) are positioned at opposing contact and support means (34) of the belt-like element (6).

19. The device according to any of the foregoing claims from 3 to 18, **characterised in that** the slats (10) and the tiles (31) are made of a plastic material.

20. The device according to any of the foregoing claims from 3 to 18, **characterised in that** the slats (10) and the tiles (31) are made of a harmonic metal material.

## Patentansprüche

1. Schutzvorrichtung für Teile von Bearbeitungsmaschinen, enthaltend ein aufrollbares flexibles Teil (5), beschrieben durch ein bandartiges Element (6), und Abdeckmittel (8), bestehend aus einer Anzahl von Abdeckelementen (9) und befestigt in einem Bereich (12) an dem bandartigen Element (6) durch jeweilige Verbindungsmittel (14); **dadurch gekennzeichnet, dass** die Abdeckelemente (9) in überlappender Weise an dem bandartigen Element (6) angeordnet sind, um eine schuppenförmige Struktur zu bilden.

2. Vorrichtung nach Patentanspruch 1, **dadurch gekennzeichnet, dass** sie eine Rolle (7) enthält, um welche sich das aufrollbare flexible Teil (5) auf- und abrollt, und an welche die Abdeckmittel (8) angeschlossen sind.

3. Vorrichtung nach Patentanspruch 1, **dadurch gekennzeichnet, dass** die Abdeckelemente (9) aus einer Anzahl von Lamellen (10) bestehen, die quer zu der Längsachse (11) des bandartigen Elementes (6) verlaufen und auf solche Weise angeordnet sind, dass sie entlang der Längsachse (11) einander überlappen; wobei die Verbindungsmittel (14) zwischen dem bandartigen Element (6) und einer jeweiligen Längskante (13) einer jeden Lamelle (10) positioniert sind.

4. Vorrichtung nach Patentanspruch 1, **dadurch gekennzeichnet, dass** die Abdeckelemente (9) aus einer Anzahl von Platten (31) bestehen, angeordnet in überlappender Weise sei es entlang der Längsachse (11) wie auch in Querrichtung zu der Längsachse (11); wobei die Verbindungsmittel (14) zwischen dem bandartigen Element (6) und einer jeden Platte (31) positioniert sind.

5. Vorrichtung nach Patentanspruch 3 oder 4, **dadurch gekennzeichnet, dass** die Lamellen (10) und die Platten (31) eine flache Struktur aufweisen.

6. Vorrichtung nach Patentanspruch 3 oder 4, **dadurch gekennzeichnet, dass** die Lamellen (10) und die Platten (31) eine bogenförmige Struktur aufweisen, mit dem konkaven Teil dem bandartigen Element (6) zugewandt.

7. Vorrichtung nach einem beliebigen der vorstehenden Patentansprüche von 3 bis 6, **dadurch gekennzeichnet, dass** die Lamellen (10) und die Platten (31) aus einem steifen Material hergestellt sind.

8. Vorrichtung nach einem beliebigen der vorstehenden Patentansprüche von 3 bis 6, **dadurch gekennzeichnet, dass** die Lamellen (10) und die Platten (31) aus einem elastisch federnden Material hergestellt sind.

9. Vorrichtung nach einem beliebigen der vorstehenden Patentansprüche von 3 bis 8, **dadurch gekennzeichnet, dass** die Verbindungsmittel (14) aus einer Schicht von Klebematerial (15) bestehen, angebracht zwischen der Längskante (13) und dem bandartigen Element (6).

10. Vorrichtung nach einem beliebigen der vorstehenden Patentansprüche von 3 bis 8, **dadurch gekennzeichnet, dass** die Verbindungsmittel (14) aus einem U-förmigen Falz (18) des bandartigen Elementes (6) um die Längskante (13) bestehen; wobei Mittel zum Befestigen des bandartigen Elementes (6) an der Längskante (13) vorgesehen sind.

11. Vorrichtung nach einem beliebigen der vorstehenden Patentansprüche von 3 bis 8, **dadurch gekennzeichnet, dass** die Verbindungsmittel (14) aus einem Kunststoffprofil (19) bestehen, welches U-förmig um die Längskante (13) gebogen ist; wobei Mittel zum Befestigen einer Seite des Profils (19) an dem bandartigen Element (6) vorgesehen sind.

12. Vorrichtung nach einem beliebigen der vorstehenden Patentansprüche von 3 bis 8, **dadurch gekennzeichnet, dass** die Verbindungsmittel (14) aus einem Kunststoffstreifen (16) bestehen, positioniert entlang der Längskante (13) auf der Seite der Kante (13), die dem bandartigen Element (6) gegenüberliegt; wobei Mittel zum Befestigen des Kunststoffstreifens (16) an dem bandartigen Element (6) vorgesehen sind.

13. Vorrichtung nach einem beliebigen der vorstehenden Patentansprüche von 10 bis 12, **dadurch gekennzeichnet, dass** die Längskante (13) der Lamellen (10) oder der Platten (31) wenigstens eine Bohrung (17) aufweist.

14. Vorrichtung nach einem beliebigen der vorstehenden Patentansprüche von 3 bis 8 und nach Patentanspruch 13, **dadurch gekennzeichnet, dass** die Verbindungsmittel (14) Befestigungsmittel (20) enthalten, die einsetzbar sind durch die Bohrung (17) in der Längskante (13) der Lamellen (10) oder der Fliesen (31) in eine passrechte Bohrung (23), die in das bandartige Element (6) eingearbeitet ist.

15. Vorrichtung nach Patentanspruch 14, **dadurch gekennzeichnet, dass** die Befestigungsmittel (20) einen Kopf (21), einen Schaft (22) und einen Gegenkopf (26) zum Blockieren enthalten; wobei der Kopf (21) und der Gegenkopf (26) gebogene Oberflächen (29, 39) aufweisen, welche jeweilige Kontaktbereiche (27, 28) mit der Längskante (13) und mit dem bandartigen Element (6) beschreiben; und wobei die Kontaktbereiche (27, 28) im wesentlichen koaxial zu den Bohrungen (17, 23) verlaufen und von den Rändern letzterer einen Abstand haben.

16. Vorrichtung nach Patentanspruch 15, **dadurch gekennzeichnet, dass** der Gegenkopf (26) zum Blockieren eine Unterlegscheibe (25) mit einer gebogenen Oberfläche (30) hat, deren konkaver Teil dem jeweiligen Kontaktbereich (28) gegenüberliegt.

17. Vorrichtung nach einem beliebigen der vorstehenden Patentansprüche von 1 bis 16, **dadurch gekennzeichnet, dass** sie Abstreifmittel (32) zur Reinigung enthält, die mit den Abdeckmitteln (8) zusammenwirken.

18. Vorrichtung nach Patentanspruch 17, **dadurch gekennzeichnet, dass** die Abstreifmittel (32) zum Reinigen an sich gegenüberliegenden Kontakt- und Haltemitteln (34) des bandartigen Elementes (6) positioniert sind.

19. Vorrichtung nach einem beliebigen der vorstehenden Patentansprüche von 3 bis 18, **dadurch gekennzeichnet, dass** die Lamellen (10) und die Platten (31) aus einem Kunststoffmaterial hergestellt sind.

20. Vorrichtung nach einem beliebigen der vorstehenden Patentansprüche von 3 bis 18, **dadurch gekennzeichnet, dass** die Lamellen (10) und die Platten (31) aus einem harmonischen Metall hergestellt sind.

## Revendications

1. Un dispositif de protection pour des parties de machines de fabrication, comprenant un organe roulant flexible (5) défini par un élément de type bande (6) et des moyens couvrants (8) consistant en une pluralité d'éléments de couverture (9) fixés à l'élément de type bande (6) par l'intermédiaire de moyens d'accouplement (14) respectifs au niveau d'une zone (12) ; ledit dispositif étant **caractérisé en ce que** les éléments de couverture (9) sont disposés sur l'élément de type bande (6) de manière à se chevaucher et à former une structure imbriquée.

2. Le dispositif selon la revendication 1, **caractérisé en ce qu'**il comprend un rouleau (7) autour duquel l'organe roulant flexible (5) s'enroule et se déroule et auquel les moyens couvrants (8) sont reliés.

3. Le dispositif selon la revendication 1, **caractérisé en ce que** les éléments de couverture (9) consistent en une pluralité de lames (10) reposant transversalement à l'axe longitudinal (11) de l'élément de type bande (6) et disposées de manière à se chevaucher le long de l'axe longitudinal (11) ; les moyens d'accouplement (14) étant positionnés entre l'élément de type bande (6) et un bord longitudinal (13) respectif de chaque lame (10).

4. Le dispositif selon la revendication 1, **caractérisé en ce que** les éléments de couverture (9) consistent en une pluralité de plaques (31) disposées de manière à se chevaucher le long de l'axe longitudinal (11) et transversalement à ce même axe longitudinal (11) ; les moyens d'accouplement (14) étant positionnés entre l'élément de type bande (6) et chaque plaque (31).

5. Le dispositif selon la revendication 3 ou 4, **caractérisé en ce que** les lames (10) et les plaques (31) ont une structure plate.

6. Le dispositif selon la revendication 3 ou 4, **caractérisé en ce que** les lames (10) et les plaques (31) ont une structure incurvée dont la concavité est orientée vers l'élément de type bande (6).

7. Le dispositif selon l'une quelconque des revendications précédentes de 3 à 6, **caractérisé en ce que** les lames (10) et les plaques (31) sont réalisées dans un matériau rigide.

8. Le dispositif selon l'une quelconque des revendications précédentes de 3 à 6, **caractérisé en ce que** les lames (10) et les plaques (31) sont réalisées dans un matériau élastiquement flexible.

9. Le dispositif selon l'une quelconque des revendications précédentes de 3 à 8, **caractérisé en ce que** les moyens d'accouplement (14) consistent en une couche de matière adhésive (15) placée entre le bord longitudinal (13) et l'élément de type bande (6).

10. Le dispositif selon l'une quelconque des revendications précédentes de 3 à 8, **caractérisé en ce que** les moyens d'accouplement (14) consistent en un pli en « U » (18) de l'élément de type bande (6) entourant le bord longitudinal (13) ; des moyens étant prévus pour fixer l'élément de type bande (6) au bord longitudinal (13).

11. Le dispositif selon l'une quelconque des revendications précédentes de 3 à 8, **caractérisé en ce que** les moyens d'accouplement (14) consistent en un profilé de plastique (19) replié en « U » autour du bord longitudinal (13) ; des moyens étant prévus pour fixer un côté du profilé (19) à l'élément de type bande (6).

12. Le dispositif selon l'une quelconque des revendications précédentes de 3 à 8, **caractérisé en ce que** les moyens d'accouplement (14) consistent en une bande de plastique (16) placée le long du bord longitudinal (13), du côté du bord (13) opposé à l'élément de type bande (6) ; des moyens étant prévus pour fixer la bande de plastique (16) à l'élément de type bande (6).

13. Le dispositif selon l'une quelconque des revendications précédentes de 10 à 12, **caractérisé en ce que** le bord longitudinal (13) des lames (10) ou des plaques (31) comprend au moins un trou (17).

14. Le dispositif selon l'une quelconque des revendications précédentes de 3 à 8 et selon la revendication 13, **caractérisé en ce que** les moyens d'accouplement (14) comprennent des moyens de fixation (20) pouvant être introduits dans le trou (17) pratiqué dans le bord (13) des lames (10) ou des plaques (31) ainsi que dans un trou correspondant (23) pratiqué dans l'élément de type bande (6).

15. Le dispositif selon la revendication 14, **caractérisé en ce que** les moyens de fixation (20) comprennent une tête (21), une tige (22) et une contre-tête de blocage (26) ; la tête (21) et la contre-tête (26) présentant des surfaces courbes (29, 30) qui définissent des zones (27, 28) respectives de contact avec le bord longitudinal (13) et avec l'élément de type bande (6) ; les zones de contact (27, 28) étant essentiellement coaxiales aux trous (17, 23) et espacées des bords de ces derniers.

16. Le dispositif selon la revendication 15, **caractérisé en ce que** la contre-tête de blocage (26) comprend une rondelle (25) ayant une surface courbe (30) dont la concavité est à l'opposé de la zone de contact (28) respective.

17. Le dispositif selon l'une quelconque des revendications précédentes de 1 à 16, **caractérisé en ce qu'**il comprend des moyens racleurs de nettoyage (32) qui agissent en association avec les moyens couvrants (8).

18. Le dispositif selon la revendication 17, **caractérisé en ce que** les moyens racleurs de nettoyage (32) sont placés au niveau de moyens de support et de renvoi (34) de l'élément de type bande (6).

19. Le dispositif selon l'une quelconque des revendications précédentes de 3 à 18, **caractérisé en ce que** les lames (10) et les plaques (31) sont réalisées en matière plastique.

20. Le dispositif selon l'une quelconque des revendications précédentes de 3 à 18, **caractérisé en ce que** les lames (10) et les plaques (31) sont réalisées dans un matériau métallique harmonique.
